# EUROPÄISCHE PATENTSCHRIFT

(11) **EP 2 736 960 B1**
(45) Veröffentlichungstag und Bekanntmachung des Hinweises auf die Patenterteilung: **09.09.2015**
(21) Anmeldenummer: 12740095.0
(22) Anmeldetag: 11.07.2012
(51) Int. Cl.: C08G 77/16, C08G 77/34

(54) **ABTRENNUNG VON CYCLISCHEN SILOXANEN AUS KURZKETTIGEN SILOXANEN MIT ENDSTÄNDIGEN HYDROXYLGRUPPEN**
SEPARATING CYCLIC SILOXANES FROM SHORT-CHAIN SILOXANES HAVING TERMINAL HYDROXYL GROUPS
SÉPARATION DE SILOXANES CYCLIQUES/SILOXANES À CHAÎNE COURTE À GROUPES TERMINAUX HYDROXYLES

(30) Priorität: 25.07.2011 DE 102011079751
(43) Veröffentlichungstag der Anmeldung: 04.06.2014
(73) Patentinhaber: Wacker Chemie AG, 81737 München (DE)
(72) Erfinder: POPP, Alfred, 82008 Unterhaching (DE); KAES, Christine, 84489 Burghausen (DE); KÄPPLER, Klaus, 84489 Burghausen (DE); BÜTTNER, Ulrike, 01619 Bobersen (DE)
(74) Vertreter: Fritz, Helmut
(86) Internationale Anmeldenummer: PCT/EP2012/063573
(87) Internationale Veröffentlichungsnummer: WO 2013/013980

(56) Entgegenhaltungen:
- EP-A1- 0 543 665
- DE-A1- 19 507 594
- US-A- 3 493 595
- US-A1- 2002 161 158

## Beschreibung

Die Erfindung betrifft ein Verfahren zur Abtrennung von cyclischen Siloxanen aus kurzkettigen Siloxanen mit endständigen Hydroxylgruppen und kurzkettiges Siloxan mit einem niedrigen Gehalt an cyclischen Siloxanen.

Siloxane mit endständigen Hydroxylgruppen, zum Beispiel Polydimethylsiloxane mit endständigen Hydroxylgruppen, Polydimethyl(methylvinyl)siloxane mit endständigen Hydroxylgruppen und Polydimethyl(methylphenyl)siloxane mit endständigen Hydroxylgruppen werden als Vernetzungsmittel, Weichmacher und Zwischenprodukte in der Siliconindustrie eingesetzt. Diese Siloxane werden beispielsweise durch Hydrolyse von Dimethyldichlorsilan, Methylvinyldichlorsilan bzw. Methylphenyldichlorsilan in Gegenwart von Chlorsiloxanen oder von Alkoxysiloxanen hergestellt. Das resultierende Produkt wird aus Wasser abgetrennt, um eine Hydrolysatmischung bereitzustellen, die neben den gewünschten kurzkettigen Siloxanen mit endständigen Hydroxylgruppen auch cyclische Siloxane enthält.

Die cyclischen Siloxane D4 (Octamethylcyclotetrasiloxan), D5 (Decamethylcyclopentasiloxan) und D6 (Dodecamethylcyclohexasiloxan) werden von der OECD als "High Production Volume Chemicals" (> 1000 t/Jahr in mindestens einem OECD Mitgliedsstaat) gelistet. Aufgrund ihres großen Produktionsvolumens und der zunehmenden Verwendung, die in einer erhöhten Exposition des Menschen und einem vermehrten Eintrag in die Umwelt resultiert, wurden Siloxane bezüglich ökotoxikologischer Kriterien wie Umweltpersistenz und Bioakkumulation sowie bezüglich ihrer toxischen Wirkungen auf Mensch und Tier untersucht. Siloxane erfüllen einige der für eine Einstufung als PBT Substanzen ("Persistence, Bioaccumulation, Toxicity") nötigen Voraussetzungen. Sie.sind vergleichsweise stabil, können in der Atmosphäre über weite Strecken transportiert werden und verfügen über eine ausreichende physikalische und biologische Halbwertszeit, um sich in der Umwelt und in aquatischen Lebewesen anzureichern.

Unter diesem Gesichtspunkt besteht ein Bedarf, kurzkettige Siloxane mit.endständigen Hydroxylgruppen mit einem geringen Gehalt an cyclischen Siloxanen und ein Verfahren zu deren Herstellung bereit zu stellen.

Verfahren zur Herstellung von linearen Siloxanen und die Abtrennung von flüchtigen Verbindungen, u. a. von cyclischen Siloxanen daraus, sind bekannt (siehe Verfahren A - D).

### (Verfahren A)

WO 9410228 beschreibt ein Verfahren zur Reinigung von flüssigem Polysiloxan, das Verunreinigungen als niedermolekulare Fraktion enthält, durch Verdampfen der niedermolekularen Fraktion. Dabei werden aufgrund des niedrigen Siedepunktes auch die niedermolekularen Anteile des kurzkettigen Siloxans mit abgetrennt (siehe dazu das vorliegende Vergleichsbeispiel) und die Kettenlängenverteilung eines kurzkettigen Siloxans mit endständigen Hydroxylgruppen wird verändert. Die Folge daraus ist ein verändertes Eigenschaftsprofil wie beispielsweise eine höhere Viskosität etc. oder Unterschiede in den Anwendungseigenschaften z. B. als Weichmacher.

### (Verfahren B)

US 4096160 beschreibt die Abtrennung von niedrigsiedenden zyklischen Polysiloxanen aus linearer Hydroxyl-endständigen Diorganopolysiloxan-Flüssigkeit mit Dampf unter Teilvakuum von höchstens 9333 Pa (70 mm Hg). Dabei werden Restcyclengehalte in dem linearen Hydroxyl-endständigen Diorganopolysiloxan von < 2 % erreicht. Jedoch werden aufgrund des niedrigen Siedepunktes auch die niedermolekularen Anteile des kurzkettigen Siloxans mit abgetrennt und damit die Kettenlängenverteilung des gewünschten kurzkettigen Siloxans mit endständigen Hydroxylgruppen verändert.

### (Verfahren C)

EP 1013698 beschreibt ein Verfahren zur kontinuierlichen Verringerung der Menge von cyclischen Organosiloxanen in einem im Kreis geführten Prozessstrom bei dem aus dem Prozessstrom eine niedrigsiedende Fraktion, enthaltend cyclische Organosiloxane mit niedrigem Molekulargewicht und ein inertes Lösungsmittel, destillativ abgetrennt wird. Dabei werden wie bei Verfahren A auch die niedermolekularen Anteile eines kurzkettigen Siloxans mit abgetrennt.

### (Verfahren D)

EP 543665 beansprucht eine Reinigungsmethode für langkettige Siloxane durch Inkontaktbringen des Siloxans mit Wasserdampf und ausdestillieren und Abtrennen der Verunreinigungen mit dem Wasserdampf. Die Verunreinigungen umfassen cyclische und kurzkettige Siloxane.

US 20020161158 offenbart die Entfernung von cyclischen Siloxanen mit Wasserdampf aus Polysiloxan/Polyoxyalkylen Block copolymeren.

Gegenstand der Erfindung ist ein Verfahren zur Entfernung von cyclischen Siloxanen aus einer Mischung, die cyclische Siloxane und kurzkettige Siloxane mit endständigen Hydroxylgruppen enthält, bei dem die cyclischen Siloxane bei mindestens 650 hPa absolut mit einem Wasserdampfstrom abgetrennt werden.

Überraschender Weise wurde gefunden, dass kurzkettige cyclenarme Siloxane mit endständigen Hydroxylgruppen erhalten werden, wenn man Wasserdampf in Kontakt bringt mit durch cyclische Siloxane verunreinigtes Siloxan, da die kurzkettigen Siloxane mit endständigen Hydroxylgruppen nicht mit dem Wasserdampf abgetrennt werden.

Die cyclischen Siloxane weisen die allgemeine Formel (I)

(R¹R²SiO)ₘ (I)

auf, in der
- **R¹**: Alkylgruppe mit 1 bis 12 Kohlenstoffatomen,
- **R²**: die Bedeutungen von R¹, Arylgruppe mit 5 bis 30 Kohlenstoffatomen oder Alkenylgruppe mit 2 bis 12 Kohlenstoffatomen und
- **m**: ganzzahlige Werte von 3 bis 20 bedeuten.

Der Substituent R¹ weist vorzugsweise 1 bis 12 Kohlenstoffatome auf und kann zum Beispiel Methyl, Ethyl, Propyl, tert.- Butyl und Hexyl sein. Besonders bevorzugt ist es, wenn jeder R¹ Substituent Methyl ist. Der Substituent R² west vorzugsweise höchstens 10 Kohlenstoffatome auf kann zum Beispiel Methyl, Ethyl, Propyl, tert.-Butyl, Hexyl, Phenyl, Tolyl, Xylyl, Naphthyl und Vinyl sein. Bevorzugt ist es, wenn jedes R² unabhängig voneinander ausgewählt ist aus Methyl und Vinyl. Besonders bevorzugt ist es, wenn R² ausgewählt ist aus Methyl und Vinyl und jedes R² das Gleiche ist, dass also alle R² entweder Methyl oder Vinyl sind. Der Wert m beträgt vorzugsweise 4 bis 10.

Die kurzkettigen Siloxane mit endständigen Hydroxylgruppen weisen die allgemeine Formel (II)

HO(R³R⁴SiO)ₙH (II)

auf, in der
- **R³**: Alkylgruppe mit 1 bis 12 Kohlenstoffatomen,
- **R⁴**: die Bedeutungen von **R³**, Arylgruppe mit 5 bis 30 Kohlenstoffatomen oder Alkenylgruppe mit 2 bis 12 Kohlenstoffatomen und
- **n**: ganzzahlige Werte von 2 bis 100 bedeuten.

Beispiele für R³ und bevorzugte Bedeutungen für R³ sind vorstehend für R¹ aufgeführt. Beispiele für R⁴ und bevorzugte Bedeutungen für R⁴ sind vorstehend für R² aufgeführt. Bevorzugte Wert für n betragen 3 bis 50, insbesondere höchstens 25.

Mischungen, die cyclische Siloxane und kurzkettige Siloxane mit endständigen Hydroxylgruppen enthalten, können durch dem Fachmann bekannte Methoden hergestellt werden. Beispielsweise können diese Mischungen durch direkt Hydrolyse von ein oder mehreren substituierten Dichlorsilanen hergestellt werden, die im Anschluss gegebenenfalls noch durch Äquilibrierung modifiziert werden können.

Die cyclischen Siloxane, die hinsichtlich des Siedepunkts ähnliche Eigenschaften aufweisen wie die kurzkettigen Siloxane mit endständigen Hydroxylgruppen werden durch das in Kontakt bringen mit Wasserdampf aus der Mischung entfernt, ohne dass die Kettenlängenverteilung des kurzkettigen linearen Siloxanes wesentlich beeinflusst wird oder einzelne Bestandteile des kurzkettigen Siloxans entfernt werden.

Dabei liegt der Anteil der cyclischen Siloxane in der Mischung mit den kurzkettigen Siloxanen mit endständigen Hydroxylgruppen vor Anwendung des erfindungsgemäßen Verfahrens bezogen auf die Summe von D4+D5+D6 (entspricht m = 4 bis 6) in einem Bereich von 4% - 25%, bevorzugt in einem Bereich von 5% - 20% und besonders bevorzugt in einem Bereich von 5% - 15%. Vorzugsweise bedeuten dabei R¹ = R² = Methylgruppe in der allgemeinen Formel I.

Der Anteil der cyclischen Siloxane in der Mischung mit den kurzkettigen Siloxanen mit endständigen Hydroxylgruppen nach Anwendung des erfindungsgemäßen Verfahrens bezogen auf die Summe von cyclischen Siloxanen der allgemeinen Formel (I), in der m = 4 bis 6 liegt in einem Bereich von 0 - 20000 Gew.-ppm, bevorzugt in einem Bereich von 0 - 15000 Gew.-ppm und besonders bevorzugt in einem Bereich von 0 - 10000 Gew.-ppm. Vorzugsweise bedeuten dabei R¹ = R² = Methylgruppe in der allgemeinen Formel I.

Gegenstand der Erfindung sind auch kurzkettige Siloxane der allgemeinen Formel (II), die höchstens einen Gehalt an cyclischen Siloxanen der allgemeinen Formel (I) mit m = 4 und m = 5 von jeweils höchstens 0,5 Gew.-%, insbesondere höchstens 0,2 Gew.-%, und mit m = 6 von höchstens 1 Gew.-% insbesondere höchstens 0,5 Gew.-% aufweisen. Diese cyclenarmen Siloxane können nach dem vorstehenden Verfahren erhalten werden.

Vorzugsweise bedeuten dabei R¹ = R² = Methylgruppe in der allgemeinen Formel I. Vorzugsweise bedeuten dabei R³ = R⁴ = Methylgruppe in der allgemeinen Formel II. Ebenfalls bevorzugt ist die Bedeutung von R³ = Methylgruppe und R⁴ = Methylgruppe oder Vinylgruppe.

Das in Kontakt bringen der Siloxanmischung mit Wasserdampf kann auf jede dem Fachmann bekannte Art und Weise erfolgen, beispielsweise durch Wasserdampfdestillation. Das Verfahrens kann kontinuierlich oder batch-weise, bevorzugt kontinuierlich durchgeführt werden.

Um zu verhindern, dass kurzkettige Siloxane mit endständigen Hydroxylgruppen zusammen mit dem Wasserdampf übergetrieben werden, wird das Verfahren bei Drücken von mindestens 650 hPa durchgeführt. Bevorzugt liegt der Verfahrensdruck bei 800 hPa bis 5000 hPa absolut. Besonders bevorzugt liegt der Verfahrensdruck bei 900 hPa bis 2000 hPa absolut.

Das Verfahren wird bei Temperaturen größer oder gleich der Temperatur des eingesetzten Wasserdampfes durchgeführt. Bevorzugt liegt die Verfahrenstemperatur bei 100 bis 200 °C. Besonders bevorzugt liegt die Verfahrenstemperatur bei 100 und bis 150 °C.

Das abgetrennte Gemisch aus Wasserdampf und cyclischen Siloxanen wird durch dem Fachmann bekannte Methoden niedergeschlagen beispielsweise durch Kondensation in einem Kühler. Die bei Temperaturen niedriger als der Prozesstemperatur in Wasser schlechter löslichen cyclischen Siloxane werden dann vorzugsweise durch physikalische Trennoperationen (Phasentrennung) vom kondensierten Wasserdampf abgetrennt und können gegebenenfalls in Prozessen, analog dem in der DE 2630744 A beschriebenen Verfahren, wieder eingesetzt werden.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 1000 hPa (abs.) und alle Temperaturen 20°C.

### Beispiel

Ein 2L-Kolben wird zu ca. 2/3 mit Wasser gefüllt und dieses zum Sieden erhitzt. Der dabei entstehende Wasserdampf wird in einen 500mL-Kolben geleitet, der mit 230 g einer auf 100 °C temperierten Mischung der in Tabelle 1 als Ausgangsmischung aufgeführten Zusammensetzung befüllt ist, so dass die Einleitstelle unterhalb des Flüssigkeitsspiegels liegt.

Die Temperatur im 500mL-Kolben wird so gesteuert, dass dort möglichst wenig Wasser kondensiert (Temperatur immer > 100 °C). Der durch die Mischung geleitete Wasserdampf wird in einem absteigenden Kühler kondensiert und das Kondensat in einem weiteren Kolben aufgefangen. Es wird so lange Wasserdampf durch die Mischung geleitet, bis der Ablauf des Kühlerkondensats keine Phasentrennung mehr zeigt.

Sowohl im Kolben mit der Ausgangsmischung als auch im Kolben mit dem Kondensat wird die wässrige Phase abgetrennt.

Von der Ausgangsmischung verbleiben nach der Behandlung 198 g der in Tabelle 2 aufgeführten Zusammensetzung.

Aus dem Dampfkondensat scheiden sich 23 g eines Siloxangemischs in Tabelle 3 aufgeführten Zusammensetzung ab.

**Tabelle 1: Zusammensetzung der Ausgangsmischung**

| Hexamethylcyclotrisiloxan | Octamethylcyclotetra siloxan | Decamethylcyclopenta siloxan | Dodecamethylcyclohexa-siloxan | Tetradecamethylcycloheptasiloxan | Polysiloxan der Formel II mit R¹ = R² = CH₃ und einer mittleren Kettenlänge von n = 12 |
|---|---|---|---|---|---|
| 0,1 % | 1,3 % | 6,5 % | 2,3 % | 0,5 % | 89,3 % |

**Tabelle 2: Zusammensetzung nach Anwendung des Verfahrens**

| Hexamethylcyclotrisiloxan [D3] | Octamethylcyclotetra siloxan [D4] | Decamethylcyclopenta siloxan [D5] | lcyclohexasiloxan [D6] | Tetradecamethylcycloheptasiloxan [D7] | Polysiloxan der Formel II mit R¹ = R² = CH₃ und einer mittleren Kettenlänge von n = 12 |
|---|---|---|---|---|---|
| 0,0 % | 0,2 % | 0,3 % | 0,9 % | 0,5 % | 98,1 % |

**Tabelle 3: Zusammensetzung des Siloxangemischs aus dem Dampfkondensat**

| Gehalt in [%] an cyclischem Siloxan der allgemeinen Formel I mit R¹ - R² = CH₃ und | | | | | | | | | Gehalt in [%] an Polysiloxan der allgemeinen Formel II mit R¹ = R² = CH₃ und | | | | | | | | | | |
|---|---|---|---|---|---|---|---|---|---|---|---|---|---|---|---|---|---|---|---|
| m = | 3 | 4 | 5 | 6 | 7 | 8 | 9 | 10 | n = | 3 | 4 | 5 | 6 | 7 | 8 | 9 | 10 | 11 | 12 |
| | 0,1 | 11,1 | 62,3 | 12,2 | 1,0 | 0,2 | 0,0 | 0,0 | | 0,4 | 4,6 | 4,8 | 2,0 | 0,6 | 0,2 | 0,1 | 0,0 | 0,0 | 0,0 |

### Vergleichsbeispiel (nicht erfindungsgemäß)

In einen Labor-Kurzwegverdampfer (Verdampferfläche ∼ 700 cm²) wird bei einer Verdampfungstemperatur von 140 °C und einem Druck von 50 Pa (< 0,5 mbar) die o. g. Ausgangsmischung mit einer Rate von 1 L/h dosiert. Man erhält kontinuierlich ca. 70 % der eingesetzten Menge als Sumpfablauf der in Tabelle 4 aufgeführten Zusammensetzung.

Das entstehende Destillat (ca. 30 % der eingesetzten Menge) wird separat kondensiert und hat die in Tabelle 5 aufgeführte, Zusammensetzung.

**Tabelle 4: Zusammensetzung des Sumpfablaufs**

| Hexamethylcyclotrisiloxan [D3] | Octamethylcyclotetrasiloxan [D4] | Decamethyl-cyclopent asiloxan [D5] | Dodecameth ylcyclohexasiloxan [D6] | Tetradecamethylcycloheptasiloxan [D7] | Polysiloxan der Formel II mit R¹ = R² = CH₃ und einer mittleren Kettenlänge von n = 12 |
|---|---|---|---|---|---|
| 0,0 % | 0,1 % | 0,2 % | 0,6 % | 0,3 % | 98,8 % |

**Tabelle 5: Zusammensetzung des Destillats**

| Gehalt in [%] an cyclischem Siloxan der allgemeinen Formel I mit R¹ = R² = CH₃ und | | | | | | | | | Gehalt in [%] an Polysiloxan der allgemeinen Formel II mit R¹ = R² = CH₃ und n = | | | | | | | | | | |
|---|---|---|---|---|---|---|---|---|---|---|---|---|---|---|---|---|---|---|---|
| m = | 3 | 4 | 5 | 6 | 7 | 8 | 9 | 10 | n = | 3 | 4 | 5 | 6 | 7 | 8 | 9 | 10 | 11 | 12 |
| | 0,0 | 4,0 | 22,0 | 5,7 | 0,7 | 0,3 | 0,2 | 0,1 | | 1,5 | 7,8 | 13,9 | 13,5 | 11,3 | 8,7 | 4,9 | 2,5 | 1,3 | 0,7 |

## Patentansprüche

1. Verfahren zur Entfernung von cyclischen Siloxanen aus einer Mischung, die cyclische Siloxane der allgemeinen Formel (I)
(R¹R²SiO)ₘ (I),
in der
**R¹** Alkylgruppe mit 1 bis 12 Kohlenstoffatomen,
**R²** die Bedeutungen von R¹, Arylgruppe mit 5 bis 30 Kohlenstoffatomen oder Alkenylgruppe mit 2 bis 12 Kohlenstoffatomen und
**m** ganzzahlige Werte von 3 bis 20 bedeuten und kurzkettige Siloxane mit endständigen Hydroxylgruppen der allgemeinen Formel (II)
HO(R³R⁴SiO)ₙH (II)
in der
**R³** Alkylgruppe mit 1 bis 12 Kohlenstoffatomen,
**R⁴** die Bedeutungen von **R³,** Arylgruppe mit 5 bis 30 Kohlenstoffatomen oder Alkenylgruppe mit 2 bis 12 Kohlenstoffatomen und
**n** ganzzahlige Werte von 2 bis 100 bedeuten, enthält, bei dem die cyclischen Siloxane bei mindestens 650 hPa absolut mit einem Wasserdampfstrom abgetrennt werden, wobei der Anteil der cyclischen Siloxane in der Mischung nach Anwendung des Verfahrens bezogen auf die Summe von cyclischen Siloxanen der allgemeinen Formel (I), in der m = 4 bis 6 in einem Bereich von 0 - 20000 Gew.-ppm liegt.

2. Verfahren nach Anspruch 1, bei dem der Verfahrensdruck bei 800 hPa bis 5000 hPa absolut liegt.

3. Verfahren nach Anspruch 1 oder 2, bei dem die Verfahrenstemperatur bei 100 bis 200 °C liegt.

## Claims

1. Method for removing cyclic siloxanes from a mixture which contains cyclic siloxanes of the general formula (I)
(R¹R²SiO)ₘ (I),
where
**R¹** stands for alkyl group having 1 to 12 carbon atoms,
**R²** stands for the meanings of R¹, aryl group having 5 to 30 carbon atoms or alkenyl group having 2 to 12 carbon atoms and
**m** stands for integral values from 3 to 20, and short-chain siloxanes having terminal hydroxyl groups of the general formula (II)
HO(R³R⁴SiO)ₙH (II),
where
**R³** stands for alkyl group having 1 to 12 carbon atoms,
**R⁴** stands for the meanings of **R³,** aryl group having 5 to 30 carbon atoms or alkenyl group having 2 to 12 carbon atoms and
**n** stands for integral values from 2 to 100,
wherein the cyclic siloxanes are separated using a steam stream at at least 650 hPa absolute, where the fraction of the cyclic siloxanes in the mixture after use of the method, based on the sum of cyclic siloxanes of the general formula (I) in which m = 4 to 6, is in a range of 0 - 20 000 ppm by weight.

2. Method according to Claim 1, wherein the method pressure is 800 hPa to 5000 hPa absolute.

3. Method according to Claim 1 or 2, wherein the method temperature is 100 to 200°C.

## Revendications

1. Procédé pour la séparation de siloxanes cycliques à partir d'un mélange qui contient des siloxanes cycliques de formule générale (I)
(R¹R²SiO)ₘ (I)
dans laquelle
**R¹** représente un groupe alkyle ayant de 1 à 12 atomes de carbone,
**R²** a les significations de R¹, représente un groupe aryle ayant de 5 à 30 atomes de carbone ou un groupe alcényle ayant de 2 à 12 atomes de carbone et
m représente des nombres entiers valant de 3 à 20
et des siloxanes à courte chaîne comportant des groupes hydroxy terminaux, de formule générale (II)
HO(R³R⁴SiO)ₙH (II)
dans laquelle
**R³** représente un groupe alkyle ayant de 1 à 12 atomes de carbone,
**R⁴** a les significations de R³, représente un groupe aryle ayant de 5 à 30 atomes de carbone ou un groupe alcényle ayant de 2 à 12 atomes de carbone et
**n** représente des nombres entiers valant de 2 à 100,
dans lequel on sépare les siloxanes cycliques sous une pression absolue d'au moins 650 hPa à l'aide d'un courant de vapeur d'eau, la proportion des siloxanes cycliques dans le mélange après utilisation du procédé se situant dans une plage de 0 - 20 000 ppm en poids, sur la base de la somme des siloxanes cycliques de formule générale (I), dans laquelle m = 4 à 6.

2. Procédé selon la revendication 1, dans lequel la pression absolue du processus vaut de 800 hPa à 5 000 hPa.

3. Procédé selon la revendication 1 ou 2, dans lequel la température du processus vaut de 100 à 200 °C.
